# EUROPEAN PATENT APPLICATION

(11) **EP 3 238 795 A1**
(43) Date of publication of application: **01.11.2017**
(21) Application number: 16180420.8
(22) Date of filing: 20.07.2016
(51) Int. Cl.: A63F 13/00, G06F 21/32, G06K 9/00

(54) **GAME MACHINE HAVING IMAGE DATA ANALYSIS FUNCTION**

(30) Priority: 27.04.2016 TW 105113178
(71) Applicant: Paokai Electronic Enterprise Co., Ltd., Kaohsiung City (TW)
(72) Inventor: WEI, Ming-Shan, Kaohsiung City (TW)
(74) Representative: Lang, Christian

(57) **Abstract**

The present disclosure provides a game machine having image data analysis function, including a machine body (1), an image photographing device (2), a processor (3) and a controlled device (4). The machine body (1) includes a controlling portion (11). The image photographing device (2) photographs toward the controlling portion (11) and generates an image data. The processor (3) is electrically connected with the image photographing device (2) for receiving the image data, with the processor (3) generating a control command based on the image data. The controlled device (4) is electrically connected with the processor (3) for receiving the control command. The controlled device (4) switches between different operation modes according to the control command. Thus, the entertainment effect of the game machine can be improved.

## Description

### BACKGROUND OF THE INVENTION

### 1. Field of the Invention

The present invention generally relates to a game machine having image data analysis function and, more particularly, to a game machine able to output a control command based on the collected image data.

### 2. Description of the Related Art

There are various kinds of "game machines" with different ways in gameplay. Even though new recreations keeps being created, the game machines, such as those of hitting type, gambling type or claw vending type, are still popular and favored in amusement arcade.

Taking the game machine of claw vending type as an example, such a game machine generally includes a machine body having a controlling portion, a cabinet and a claw, with the cabinet adapted for receiving a plurality of prizes. When using the game machine, a user can handle the controlling portion to move the claw, such that the claw can grip the prizes in the cabinet. Thus, the user can be entertained by the excitement of claw gripping at the time of playing.

However, generally speaking, the conventional game machine can only provide the excitement of a fixed level (such as a claw vending machine merely providing a fixed grapping force) to the user. It is impossible for such a claw vending machine to adjust the level of excitement based on user information obtained through analyzing the image data of the user. Therefore, the boring and invariable setting may easily lower the user's desire for playing.

In light of the above, the present disclosure provides a game machine having image data analysis function to overcome the problem of insufficient entertainment effect of the conventional game machine due to the lack of image analysis function.

### SUMMARY OF THE INVENTION

It is therefore the objective of this invention to provide a game machine having image data analysis function which can analyze an image data to obtain user information and output a control command according to the user information. The control command switches operation mode of a controlled device, thus improving entertainment effect of the game machine.

The present disclosure provides a game machine having image data analysis function, including a machine body, an image photographing device, a processor and a controlled device. The machine body includes a controlling portion. The image photographing device photographs toward the controlling portion and generates an image data. The processor is electrically connected with the image photographing device for receiving the image data, with the processor generating a control command based on the image data. The controlled device is electrically connected with the processor for receiving the control command. The controlled device switches between different operation modes according to the control command. The game machine having image data analysis function can obtain the user information through image data analysis and correspondingly output the control command based on the user information to switch the operation mode of the controlled device. Thus, the entertainment effect of the game machine can be improved.

In a form shown, the processor includes a characteristic capturing module. After the image data is received by the processor, the characteristic capturing module generates a characteristic information according to content variation of the image data photographed in a predetermined time period. The characteristic capturing module generates the control command based on the characteristic information. As such, the characteristic capturing module can generate the control command based on the characteristic information, thus improving the entertainment effect of the game machine.

In the form shown, the characteristic information is a number of users captured in the image data during the predetermined time period. As such, after the characteristic capturing module obtains the characteristic information through visual recognition or data analysis, the characteristic capturing module can generate the control command based on the characteristic information, thus improving the entertainment effect of the game machine.

In another form shown, the characteristic information is an age distribution of users captured in the image data during the predetermined time period. As such, after the characteristic capturing module obtains the characteristic information through visual recognition or data analysis, the characteristic capturing module can generate the control command based on the characteristic information, thus improving the entertainment effect of the game machine.

In still another form shown, the predetermined time period is divided into a plurality of time intervals. The characteristic information is a population of users captured in the image data during each time interval of the predetermined time period. As such, after the characteristic capturing module obtains the characteristic information through visual recognition or data analysis, the characteristic capturing module can generate the control command based on the characteristic information, thus improving the entertainment effect of the game machine.

In the form shown, the controlled device is a claw arranged in the machine body. The claw operates according to the control command to have different gripping strength. As such, the control command can switch the gripping strength of the claw to increase the excitement of the game machine.

In another form shown, the controlled device is a lighting assembly arranged at the machine body. The lighting assembly operates according to the control command to emit light in different lighting modes. As such, the control command can switch the lighting mode of the lighting assembly to catch the user's eye.

In still another form shown, the controlled device is a sounding assembly arranged at the machine body. The sounding assembly is driven according to the control command to operate in different sounding modes. As such, the control command can switch the sounding mode of the sounding assembly to attract the user's attention.

In the form shown, the processor further comprises a data transmission module electrically connected with the characteristic capturing module. As such, the data transmission module can provide the function of remote transmission or remote control, improving the convenience of data transmission and component control.

In the form shown, the image photographing device couples with the machine body. As such, the image photographing device can certainly face the controlling portion for photographing the user. Hence, it is assured that the image data includes information of the user.

### BRIEF DESCRIPTION OF THE DRAWINGS

The present invention will become more fully understood from the detailed description given hereinafter and the accompanying drawings which are given by way of illustration only, and thus are not limitative of the present invention, and wherein:
Fig. 1 shows a game machine having image data analysis function of the present disclosure.
Fig. 2 is a system structure diagram of the game machine having image data analysis function of the present disclosure

In the various figures of the drawings, the same numerals designate the same or similar parts. Furthermore, when the terms "first", "second", "third", "fourth", "inner", "outer", "top", "bottom", "front", "rear" and similar terms are used hereinafter, it should be understood that these terms have reference only to the structure shown in the drawings as it would appear to a person viewing the drawings, and are utilized only to facilitate describing the invention.

### DETAILED DESCRIPTION OF THE INVENTION

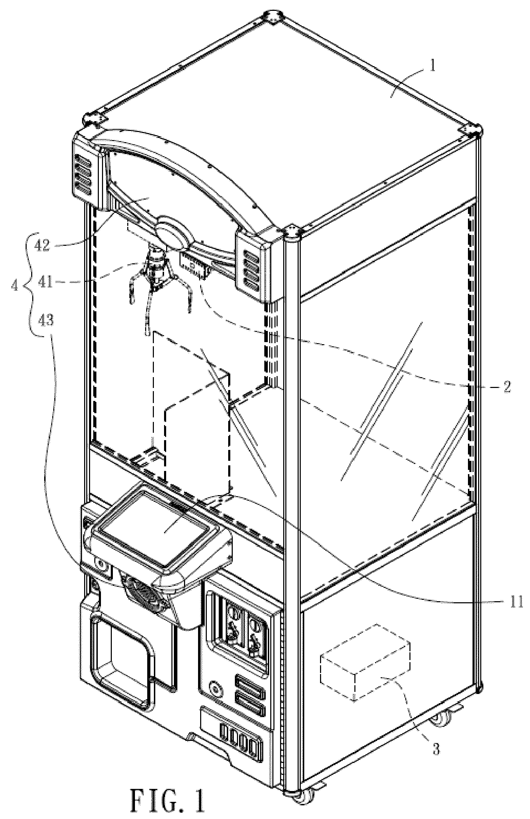

With references to Fig. 1, a game machine having image data analysis function of the present disclosure includes a machine body 1, an image photographing device 2, a processor 3 and a controlled device 4. The image photographing device 2 photographs the machine body 1. The processor 3 electrically connects to the image photographing device 2, and the controlled device 4 electrically connects to the processor 3.

The machine body 1 includes a controlling portion 11. The machine body 1 can be a game machine of any type, which is not limited in the present disclosure. In the present embodiment, the machine body 1 can be a game machine of claw vending type, and the controlling portion 11 can be a touch panel, a joystick or a set of buttons that controls the associated components of the claw vending machine, such as a claw.

The image photographing device 2 photographs toward the controlling portion 11 and generates an image data. The image photographing device 2 can be any type of camera device, which is not limited in the present disclosure. Besides, with the image photographing device 2 photographing toward the controlling portion 11 of the machine body 1, the image data mainly includes the user who controls the controlling portion 11. For instance, the image photographing device 2 can be separated from the machine body 1. In this case, after the image photographing device 2 photographs the user about the controlling portion 11 and generates the image data, the image data can be transmitted to the processor 3 through wire or in a wireless manner. Alternatively, in the present embodiment, the image photographing device 2 is preferably coupled to the machine body 1, such that the image photographing device 2 can certainly face the controlling portion 11 for photographing the user. Hence, it is assured that the image data includes information of the user.

The processor 3 electrically connects to the image photographing device 2 for receiving the image data, and generates a control command based on the image data.

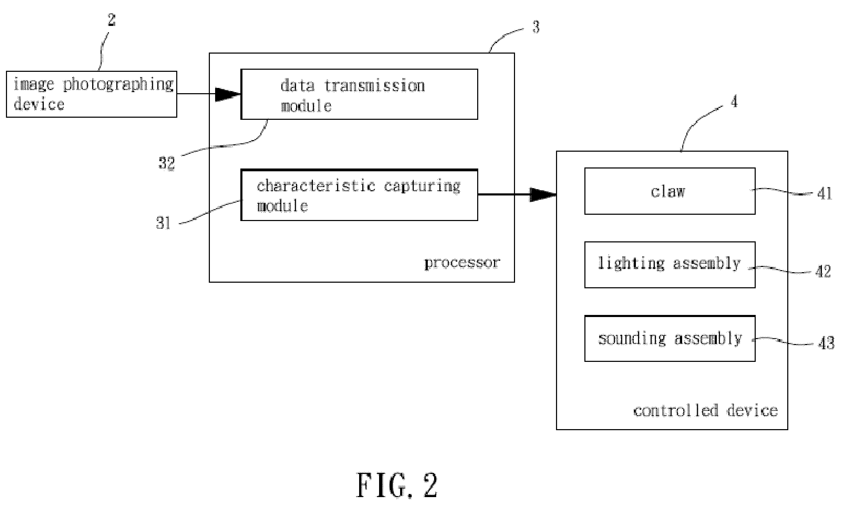

With references to Figs. 1 and 2, specifically, the processor 3 includes a characteristic capturing module 31. After the processor 3 receives the image data, the characteristic capturing module 31 generates a characteristic information based on the content variation of the image data photographed in a predetermined time period, and generates the control command according to the characteristic information. The characteristic capturing module 31 can be an integrated circuit or an arithmetic processor, which has the functions of visual recognition, data analysis and logic computing.

Besides, the characteristic information can be any kind of information that relates to the user information. In the present embodiment, the characteristic information can be the number or the age distribution of users captured in the image data during the predetermined time period. Alternatively, the predetermined time period can be divided into a plurality of time intervals, and the characteristic information can be the age distribution of users captured in the image data during each time interval. The characteristic information can include only one of the above mentioned information or include two or more of them, which is not limited in the present disclosure. After the characteristic capturing module 31 obtains the characteristic information through visual recognition or data analysis, the characteristic capturing module 13 can correspondingly send out the control command according to the characteristic information, thus improving entertainment effect of the game machine.

Moreover, the processor 3 can further include a data transmission module 32 electrically connected with the characteristic capturing module 31. The processor 3 utilizes the data transmission module 32 for receiving the image data, and then transmits the image data to the characteristic capturing module 31. Besides, the characteristic capturing module 31 can output the control command to the data transmission module 32, and then the data transmission module 32 transmits the control command to the controlled device 4.

More specifically, in the case that the processor 3 includes both the characteristic capturing module 31 and the data transmission module 32, the characteristic capturing module 31 and the data transmission module 32 can be arranged at the machine body 1 for receiving the image data from the image photographing device 2 and transmitting the control command to the controlled device 4 in a neighboring position. Alternatively, the characteristic capturing module 31 and the data transmission module 32 can be arranged separately. For instance, the characteristic capturing module 31 can be arranged at a remote server with the data transmission module 32 arranged at the machine body 1. In this case, the data transmission module 32 not only transmits the image data to the characteristic capturing module 31 at the remote server, but also receives the control command from the characteristic capturing module 31 and transmits the control command to the controlled device 4. As such, the game machine having image data analysis function of the present disclosure can further possess the function of remote transmission or remote control, improving the convenience of data transmission and operation control.

The controlled device 4 electrically connects to the processor 3 for receiving the control command, and the controlled device 4 operates according to the control command to switch between different operation modes.

The type of the controlled device 4 is not limited. When the machine body 1 is the claw vending machine as in the present embodiment, the controlled device 4 can be a claw 41 arranged inside the machine body 1. The claw 41 can operate according to the control command to have different gripping strength. Similarly, when the machine body 1 is a game machine of hitting type or gambling type, the controlled device 4 can be a built-in program which can operate according to the control command to provide games with different conditions or modes. The control of the built-in program is well-known by persons ordinarily skilled in the art, thus is not described here.

Furthermore, the controlled device 4 can be a lighting assembly 42. The lighting assembly 42 can be a light board or a light bar arranged at the machine body 1, and can operate according to the control command to emit light in different modes. Moreover, the controlled device 4 can be a sounding assembly 43, which can be a speaker arranged at the machine body 1. The sounding assembly 43 is driven according to the control command to operate in different sounding modes. Besides, the controlled device 4 can only include one of the claw 41, the lighting assembly 42 or the sounding assembly 43. Alternatively, the controlled device 4 can include two or more of them, which is not limited in the present disclosure.

For instance, when the image photographing device 2 photographs toward the controlling portion 11 and generates the image data, the characteristic capturing module 31 can thus generate the characteristic information based on the content variation of the image data photographed in the predetermined time period and then generate the control command according to the characteristic information. Specifically, when the characteristic information is the number of users captured in the image data during the predetermined time period, the characteristic capturing module 31 can send out the control command when the number of users exceed a predetermined value. When the characteristic information is the age distribution of users captured in the image data during the predetermined time period, the characteristic capturing module 31 can send out the control command when the age distribution of users falls within a predetermined range. When the characteristic information is the population of users captured in the image data during each interval of the predetermined time period, the characteristic capturing module 31 can send out the control command when there are more users captured in a specific interval.

And then, the control command can be transmitted to the controlled device 4, such that the operation mode of the controlled device 4 can be switched when the number of users exceeds the predetermined value, when the age distribution of users falls within the predetermined range, or when the number of users is a great number during the specific interval. For instance, the control command can switch the gripping strength of the claw 41 to increase the excitement of the game machine, the lighting mode of the lighting assembly 42 to catch the user's eye, or the sounding mode of the sounding assembly 43 to attract the user's attention, thus improving entertainment effect.

According to the above, the game machine having image data analysis function can obtain the user information through image data analysis and correspondingly output the control command based on the user information to switch the operation mode of the controlled device. Thus, the entertainment effect of the game machine can be improved.

## Claims

1. A game machine having image data analysis function, comprising:
a machine body (1) including a controlling portion (11); and
a controlled device (4), with the game machine having image data analysis function **characterized in** further comprising:
an image photographing device (2) photographing toward the controlling portion (11) and generating an image data; and
a processor (3) electrically connected with the image photographing device (2) for receiving the image data, with the processor (3) generating a control command based on the image data, with the controlled device (4) electrically connected with the processor (3) for receiving the control command, wherein, according to the control command, the controlled device (4) switches between different operation modes.

2. The game machine having image data analysis function as claimed in claim 1, **characterized in that** the processor (3) includes a characteristic capturing module (31), wherein, after the image data is received by the processor (3), the characteristic capturing module (31) generates a characteristic information according to content variation of the image data photographed in a predetermined time period, and wherein the characteristic capturing module (3) generates the control command based on the characteristic information.

3. The game machine having image data analysis function as claimed in claim 2, **characterized in that** the characteristic information is a number of users captured in the image data during the predetermined time period.

4. The game machine having image data analysis function as claimed in claim 2, **characterized in that** the characteristic information is an age distribution of users captured in the image data during the predetermined time period.

5. The game machine having image data analysis function as claimed in claim 2, **characterized in that** the predetermined time period is divided into a plurality of time intervals, and wherein the characteristic information is a population of users captured in the image data during each time interval of the predetermined time period.

6. The game machine having image data analysis function as claimed in claim 1, **characterized in that** the controlled device (4) is a claw (41) arranged in the machine body (1), and wherein the claw (41) operates according to the control command to have different gripping strength.

7. The game machine having image data analysis function as claimed in claim 1, **characterized in that** the controlled device (4) is a lighting assembly (42) arranged at the machine body (1), and wherein the lighting assembly (42) operates according to the control command to emit light in different lighting modes.

8. The game machine having image data analysis function as claimed in claim 1, **characterized in that** the controlled device (4) is a sounding assembly (43) arranged at the machine body (1), and wherein the sounding assembly (43) is driven according to the control command to operate in different sounding modes.

9. The game machine having image data analysis function as claimed in claim 2, **characterized in that** the processor (3) further comprises a data transmission module (32) electrically connected with the characteristic capturing module (31).

10. The game machine having image data analysis function as claimed in claim 1, **characterized in that** the image photographing device (2) couples with the machine body (1).
